# EUROPEAN PATENT APPLICATION

(11) **EP 4 668 261 A1**
(43) Date of publication of application: **24.12.2025**
(21) Application number: 24183019.9
(22) Date of filing: 19.06.2024
(51) Int. Cl.: G10L 15/06, G10L 15/16, G10L 15/183

(54) **SPEECH RECOGNITION IN A PATIENT MONITOR**

(71) Applicant: Koninklijke Philips N.V., 5656 AG Eindhoven (NL)
(72) Inventor: HE, QingJun, Eindhoven (NL)
(74) Representative: Philips Intellectual Property & Standards

(57) **Abstract**

A method of training and using a speech recognition model in a patient monitor. The speech recognition model is trained using integrated speech training data that comprises a combination of professional speech training data associated with medical terms and general speech training data. Voice inputs received by the patient monitor are processed using the trained speech recognition model to produce text outputs comprising estimates of the words in the voice input. Corresponding actions for the patient monitor are then determined responsive to the text outputs.

## Description

### FIELD OF THE INVENTION

The present invention relates to the field of patient monitors, and in particular to patient monitors comprising speech recognition capabilities.

### BACKGROUND OF THE INVENTION

Speech recognition technologies (in particular technologies utilizing AI-based approaches) are becoming prominent in consumer-based "smart" devices (e.g., smartphones, smartwatches, smart home devices, etc.) due to the improved functionality and accessibility they can offer to existing devices. Speech recognition can also increase productivity and save users time by not requiring them to perform manual tasks. There is hence an ongoing desire to implement speech recognition technologies in professional fields, such as the medical sector.

In particular, patient monitors have been recognized as a particular medical device that can benefit from speech recognition capabilities. Potential advantages include the ability to control the patient monitor from a distance, such as when a medical professional is busy elsewhere in the room or when the patient monitor is within an isolation ward, and increased accessibility for medical staff who are unfamiliar with how to access certain functions of the patient monitor.

There is thus a desire for a patient monitor with speech recognition functionalities and/or a method of tailoring a speech recognition model for use in a patient monitor.

### SUMMARY OF THE INVENTION

The invention is defined by the claims.

According to examples in accordance with an aspect of the invention, there is provided a computer-implemented method for training a speech recognition model for a patient monitor, wherein the speech recognition model is configured to process a voice input to produce a text output. The computer-implemented method comprises obtaining professional speech training data comprising a plurality of labelled voice signals indicative of medical terms, producing integrated speech training data by combining the professional speech training data with general speech training data, and training the speech recognition model responsive to the integrated speech training data.

The present invention provides a process for training a speech recognition model intended to be used in a patient monitor. Specifically, the speech recognition model is configured to convert a received voice command (i.e., a voice input), as spoken by a user, into a text string (i.e., a text output) that is understandable by the patient monitor and may indicate to the patient monitor an intended command/action. In this way, a user may operate the patient monitor solely using their voice, removing the need to physically interact with the patient monitor.

In particular, it will be understood that the speech recognition model is preferably an AI model configured to learn (i.e., from training) the dependencies between features in the voice input in order to accurately determine a desired text output.

The speech recognition model may be trained using labelled speech training data comprising audio signals representative of spoken words (e.g., sentences, phrases, etc.) labelled with corresponding transcripts of said spoken words (i.e., text data/strings). In training, the speech recognition model receives the audio signals as an input, with the transcripts being the expected output. The speech recognition model is then iteratively modified using an algorithm until a high accuracy (i.e., high likelihood of outputting the transcript) is achieved. The speech recognition model may then be used to process new received voice inputs based on said training.

It has been recognized, however, that, in order to be used in a medical setting (e.g., in a patient monitor) the speech recognition model will desirably be familiar with (i.e., trained on or using) medical terminology/language. The proposed method therefore begins with an initial step of obtaining professional speech training data relevant to a medical setting. In particular, the professional speech training data comprises labelled voice signals indicative of medical terms (e.g., words, phrases and/or sentences containing medical terms).

The professional speech training data is then combined with general speech training data (i.e., general/non-specialist training data for training a general speech recognition model) to produce integrated speech training data. The speech recognition model is then trained using the integrated speech training data.

In some examples, the step of obtaining the professional speech training data may comprise receiving voice data comprising audio data indicative of medical terms and segmenting the voice data into a plurality of voice data portions. Specifically, each voice data portion may comprise a word, phrase, or sentence of the voice data. Each voice data portion may then be labelled with a respective transcript comprising text data of the word, phrase, or sentence of the voice data portion.

In some examples, the voice data may be obtained by recording spoken sentences.

Alternatively, or additionally, the voice data may be artificially generated from text data using a text-to-speech generator. In particular, the voice data may be generated from text files from an instructions-for-use manual for the patient monitor. In this way, the professional speech training data is generated from language directly relevant to the patient monitor. Furthermore, the speech recognition model becomes specifically trained to recognize language pertaining to operation of the patient monitor.

In some examples, the step of producing the integrated speech training data may comprise pseudo-randomly (e.g., by an algorithm) or randomly (e.g., by a human) distributing the plurality of labelled voice signals of the professional speech training data into the general speech training data. Such an approach removes potential systematic bias in the training of the speech recognition model, e.g., as may be the case when the professional speech training data is positioned at the start or end of the integrated speech training data.

In some examples, the computer-implemented method of training the speech recognition model may further comprise modifying the speech recognition model using a just-in-time model.

More specifically, the speech recognition model may be modified to improve processing efficiency and reduce the consumption of computing resources during use. This may be particularly desirable when utilizing the speech recognition model in a patient monitor as they often have limited processing resources.

Also provided is a computer-implemented method for performing speech recognition in a patient monitor, comprising receiving a voice input indicative of a command for the patient monitor, processing the voice input using the trained speech recognition model according to the above disclosure to produce a text output, and determining, responsive to the text output, a corresponding action for the patient monitor.

In some examples, prior to processing the voice input, the voice input may be segmented into one or more voice input segments, wherein each voice input segment comprises at least one sentence of the voice input.

In some examples, the speech recognition model may comprise a machine-learning model. Specifically, the machine-learning model may be configured to produce the text output from the voice input.

Additionally, the machine-learning model may comprise a combination of a convolutional neural network (CNN) and a transformer. In particular, it is understood that CNNs are specialized at learning local features in (graphical) data, whereas transformers are specialized at learning global features. In the context of speech recognition, CNNS may therefore be proficient at learning particular dependencies and/or relationships between closely spaced words in a sentence (e.g., the modifications/functions provided by adjectives placed in front of a noun) while transformers may be adept at learning dependencies and/or relationships between words that are separated in a sentence but have a contextual link, such as passive or inverted words. By combining both deep-learning models, the machine-learning model may be more adept at learning complex dependencies in voice data.

Additionally, or alternatively, the speech recognition model may (also) comprise a language model. In particular, the language model may be configured to, for one or more initial words in the text output, assess the likelihood of the initial word, compared to one or more homophones associated with the initial word, appearing in a sentence given by the text output. Furthermore, in response to one of the one or more homophones being more likely than the initial word, the language model may replace the initial word in the text output with the homophone.

The text output produced by the machine-learning model may be considered an initial best estimate of the words/sentences contained within the voice input. In particular, the machine-learning model may be able to identify certain words more easily than others depending on how distinct they are, e.g., in terms of audio waveform shape. In other words, the machine-learning model may struggle to distinguish between homophonic words.

The language model may help overcome this problem by providing increased context to the identified words in the text output. More specifically, the language model may assess the likelihood that particular identified words would appear in the text output compared to alternative, similar sounding (i.e., homophonic) words, based on the remainder of the text output. The language model may then change/replace certain words in the text output with alternative words if they fit better within the context of the text output.

This approach provides increased accuracy for correctly converting the voice input into the text output.

In some examples, the language model may be configured to assess the likelihood of a particular word to appear or appearing in a sentence given by the text output using a weighted language metric. Specifically, the weighted language metric indicates a likelihood of a word to appear or appearing before and/or after a given sequence of words in a sentence. Furthermore, the weighted language metric may be generated responsive to (i.e., from) the integrated speech training data.

In some examples, the step of determining the corresponding action may comprise identifying one or more keywords in the text output and, responsive to the one or more keywords, identifying a predefined action associated with the one or more keywords.

Specifically, the predefined action may be one of a plurality of possible actions the patient monitor is configured to perform. Furthermore, the predefined action may only be triggered in response to the text output (and by extension the voice command from the user) containing the one or more keywords.

Additionally, the step of determining the corresponding action may further comprise determining a measure of semantic similarity between a label for the predefined action and the text output, and, in response to the measure of semantic similarity breaching a threshold value, performing the predefined action.

Put another way, following identifying the predefined action, the predefined action may only be performed if the predefined action is substantially similar (in meaning) to the text output, and therefore substantially similar to the voice command from the user.

As an alternative approach, the step of determining the corresponding action may further comprise, responsive to the one or more keywords, identifying one or more further predefined actions associated with the one or more keywords. A respective measure of semantic similarity may then be determined (for each predefined action) between a label for the predefined action and the text output.

The step of determining the corresponding action may then further comprise determining a closest predefined action, being the predefined action having the label associated with the largest measure of semantic similarity, and, in response to the largest measure of semantic similarity breaching a threshold value, performing the closest predefined action.

The above approach recognizes that each keyword may be associated with multiple possible predefined actions. The proposed approach therefore identifies the predefined action most similar to the text output, and thus most similar to the voice command from the user.

Also provided is a patient monitor comprising a microphone for receiving a voice input, and a processing system configured to process the voice input using a trained speech recognition model to produce a text output and determine, responsive to the text output, a corresponding action for the patient monitor.

In particular, the speech recognition model is trained using a computer-implemented method comprising obtaining professional speech training data comprising a plurality of labelled voice signals indicative of medical terms, producing integrated speech training data by combining the professional speech training data with general speech training data, and training the speech recognition model responsive to the integrated speech training data.

Further provided is a computer program product comprising computer program code means which, when executed on a patient monitor having a processing system, cause the processing system to perform all of the steps of the method for performing speech recognition in a patient monitor according to the above disclosure.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 illustrates a patient monitor;
Fig. 2 shows a flowchart illustrating a proposed method for performing speech recognition;
Fig. 3 shows a flowchart illustrating a step of the proposed method according to an embodiment;
Fig. 4 shows a flowchart illustrating a further proposed method for training a speech recognition model; and
Fig. 5 shows a flowchart illustrating a step of the further proposed method according to an embodiment.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a computer-implemented method for training a speech recognition model for a patient monitor. In particular, when trained according to the disclosed method, the speech recognition model permits a user (such as a medical professional) to control the patient monitor using spoken voice commands. Specifically, the voice commands are received by a microphone of the patient monitor and provided to a processing system that converts the received audio into computer-text (i.e., a text string) using the speech recognition model. Said computer-text is subsequently mapped onto a predefined action to be performed by the patient monitor.

In order to enhance the speech recognition model specifically for a patient monitor (or more generally for a device in a medical setting) the speech recognition model is trained using training data that comprises elements from both general training data and professional (i.e., medical) training data. Specifically, the general training data is associated with "everyday" language that forms a basic vocabulary for the speech recognition model, while the professional training data is associated with specialist medical terminology for augmenting the overall training data with language relevant to the usage scenario, i.e., a patient monitor in a medical setting.

By training the speech recognition model using the combined (i.e., integrated) training data, the speech recognition model is more adapt at recognizing words, phrases and sentences that may be spoken in a medical setting and thus relevant to desirably controlling a patient monitor through voice commands.

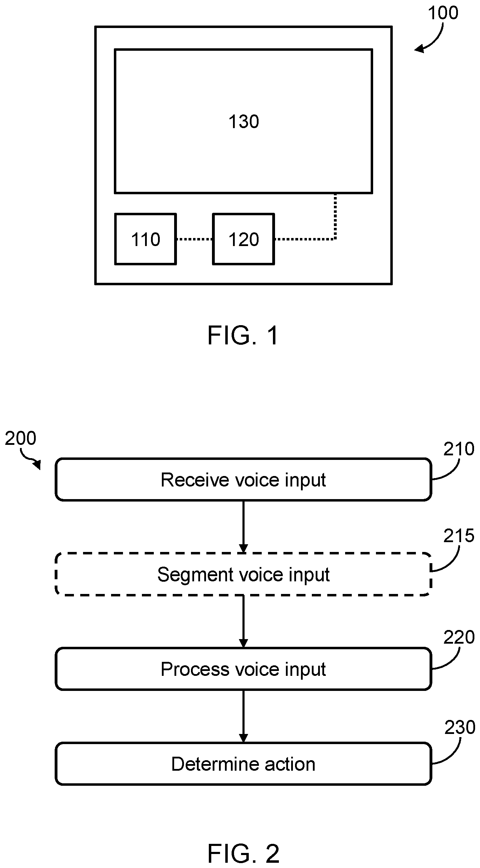

Fig. 1 provides a patient monitor 100 in which a speech recognition model may be implemented.

In general, the patient monitor 100 provides the functionality of monitoring, tracking, and/or recording biometric information associated with a subject (e.g., a patient). In particular, the biometric information is at least indicative of the subject's current health or physiological condition. Such biometric information may include, though isn't limited to, the subject's heart rate, blood pressure, body temperature, oxygen saturation, and/or respiratory rate. The biometric information may be received/obtained by the patient monitor 100 through one or more sensors (not visible in Fig. 1) engaged with the subject and interfaced with the patient monitor 100.

The patient monitor 100 may comprise a display 130 for displaying/presenting one or more values or graphs corresponding to the received biometric information, from which a user of the patient monitor (such as a medical professional) may conclude/infer a current/live condition of the subject. The user may then also decide upon corresponding treatments for the subject responsive to the displayed values/graphs. Additionally, the patient monitor 100 may comprise a memory (not visible in Fig. 1) for storing the received biometric information.

In some cases, the patient monitor 100 may be interfaced with one or more additional medical devices (not visible in Fig. 1) that may be controlled via the patient monitor 100. Furthermore, the patient monitor 100 may comprise a plurality of manual controls (not visible in Fig. 1), e.g., buttons, dials, touchscreens, etc., that permit a user to control the patient monitor 100 and/or the further medical device(s) interfaced with the patient monitor 100.

It is recognized that, at a particular moment in time, a user may desire to control a function/aspect of the patient monitor 100 but may not always be in a position to easily access the manual controls of the patient monitor 100, e.g., if the user is busy handling/treating another subject/patient, or if there is a physical object/barrier between the user and the patient monitor 100.

In accordance with the disclosed invention, the patient monitor 100 is provided with speech recognition capabilities that permit a user to control the patient monitor 100 from a distance using solely their voice. Specifically, the patient monitor 100 comprises a microphone 110 and a processing system 120 for enabling said speech recognition capabilities.

The microphone 110 is configured to receive and record sounds/audio signals produced within the vicinity of the patient monitor 100. More specifically, the microphone 110 converts received (analog) audio signals/waveforms into (digital) electrical signals that are provided to the processing system 120 for analysis and/or processing.

In particular, the processing system 120 is configured to interpret the received electrical signals in order to infer/determine characteristics of the audio signals, e.g., shape, length, amplitude, etc. In other words, from the electrical signals, the processing system 120 recovers, or otherwise knows, the waveforms of the audio signals. Processing of the electrical signals may therefore be considered equivalent to processing of the audio signals.

Accordingly, for the remainder of the present disclosure, where a processing system is said to process a received audio signal, it will be understood to mean processing of an electrical signal that is representative of (i.e., equivalent to) the audio signal.

The audio signal received by the microphone may comprise words, phrases and/or sentences as spoken by people in the vicinity of the patient monitor 100, such as medical professionals, hospital staff, patients, visitors, etc. Accordingly, the processing system 120 (which receives the audio signal from the microphone 110) is configured to process the audio signal using a speech recognition model. Through processing the audio signal, the processing system 120 produces a text string corresponding to the words, phrases and/or sentences in the received audio signal.

In certain scenarios, the words, phrases and/or sentences comprised by the received audio signal may form a spoken voice command/input intended to communicate/indicate a desired command for the patient monitor 100. By using the speech recognition model, the processing system 120 converts the received voice input into a text output (i.e., a text string) from which the processing system 120 determines a corresponding action for the patient monitor 100.

As will be later disclosed, following processing of a voice input, the patient monitor 100 may only perform an action in response to the produced text output satisfying one or more predefined criteria. This may help to filter out background noise/voices that do not correspond to spoken commands for the patient monitor 100.

Suitable actions that can be performed by the patient monitor 100 following processing of a corresponding voice input may include displaying particular biometric information on the display 130, silencing of an alarm, saving and/or loading of patient profiles, and controlling other medical devices interfaced with the patient monitor 100. Other suitable actions for the patient monitor 100 will be apparent to those skilled in the art.

Fig. 2 shows a flowchart outlining a method 200 for speech recognition in a patient monitor. In particular, the method 200 provides a process for converting voice inputs using a (trained) speech recognition model into text outputs that can be understood by the patient monitor (or more specifically by a processing system of the patient monitor).

The method 200 first comprises a step 210 of receiving a voice input (e.g., at a microphone of the patient monitor) indicative of a command for the patient monitor. In particular, the voice input is a voice command as spoken by a user to communicate a desired command for the patient monitor. The voice input preferably comprises a sentence, or a plurality of sentences, though at a minimum may comprise a word or a short phrase, that is associated with an action/function of the patient monitor.

The method 200 further comprises a step 220 of processing (e.g., by a processing system of the patient monitor) the voice input using the speech recognition model to produce a text output. Specifically, the text output comprises a text estimation of the words, phrases and/or sentences comprised by the voice input. In other words, the audio signal comprised in the voice input is converted by the speech recognition model into a text string.

Speech recognition models generally work by processing audio waveforms/spectra to identify specific spectral shapes/features that are associated with distinct vocal sounds, e.g., phonemes. The spectra can hence be broken down into a sequence of vocal sounds associated with different letters and/or strings of letters, from which different words can be constructed, thereby converting the initial audio waveform into text.

The success of a speech recognition model (i.e., how accurately the speech recognition model can convert spoken words into text) is dependent on how accurately it can match different parts/segments of the audio waveform to particular vocal sounds. Machine-learning-based speech recognition models have been demonstrated to be particularly adept at accurately converting audio signals into text, due to their ability to learn complex spectral patterns and dependencies through training.

In the present example, the speech recognition model may preferably comprise a (trained) machine-learning model configured to produce the text output from the voice input. More specifically, the audio waveform of the voice input may be processed using the machine-learning model to produce the text output.

In more preferable examples, the machine-learning model may comprise a combination (e.g., a sequence or a convolution) of a convolutional neural network (CNN) and a transformer. In other words, the machine-learning model of the speech recognition model may comprise a "hybrid" neural network.

Those skilled in the art will recognize CNNs and transformers as two distinct types of deep learning models. In particular, CNNs are known to be specialized at learning local (i.e., closely spaced) features in imaging and signal data, whereas transformers specialize at learning global features. By using these two models in combination, the machine-learning model can learn more complex dependencies (i.e., both local and global, and combinations thereof) in speech data, thereby improving the accuracy of the speech recognition model.

The speech recognition model may also comprise a (trained) language model for assessing and correcting (i.e., if deemed to be incorrect) words in the text output.

In the context of speech recognition, language models provide context to the recognized speech/text by describing the likelihood of particular words being/appearing in a given sentence. In particular, language models are trained (by examining the arrangement of words in sentences) to learn the dependencies between different words, i.e., the likelihood that a certain word will appear at a particular point in a sentence given the words before and/or after it. Language models can thus be used to assess the accuracy of text outputs produced by speech recognition processes by determining how likely it is for each word of the text output to be there given the remainder of the text output.

Furthermore, it is recognized that, when converting voice inputs to text outputs, speech recognition models are susceptible to homophone errors where a word is incorrectly identified as a similar sounding word, i.e., a homophone. Language models can hence help to correct homophone errors by identifying which homophone is most likely to appear in the sentence given by the text output.

The language model of the present invention may thus be configured to assess the likelihood of one or more words (i.e., initial words) in the text output to appear in a sentence given by the text output. For example, the language model may (only) assess homophonic initial words, i.e., initial words that are associated with one or more homophones, and compare the likelihood of the initial word appearing in the sentence to that of the one or more homophones. Accordingly, if one of the one or more homophones is/are determined to be more likely to appear in the sentence than the initial word, the language model may replace the initial word with the homophone.

As an alternative, the language model may assess all of the words of the text output, or may only assess words which have been indicated (e.g., by the machine-learning model) as being associated with a low confidence and/or accuracy. More specifically, in the latter example, the machine-learning model may generate a confidence metric for each word in the text output that indicates how sure the machine-learning model is of that word. The confidence metric may be generated responsive to how easy it was to match a particular feature in the voice input with a corresponding word or phenome for the text output. Accordingly, if the confidence metric for a particular word in the text output is below a predetermined threshold, the language model may assess the word to determine if a different word would be more appropriate given the rest of the text output.

In some cases, training of a language model may comprise generating a weighted language metric that indicates/describes the likelihood of a word to appear before and/or after a given sequence of words in a sentence. More precisely, the weighted language metric may provide a probability value/metric (e.g., a percentage) for each possible word given the sequence of words. The language model may thus assess what word is most likely to appear in a sentence using the weighted language metric, i.e., the word associated with the largest probability metric.

Accordingly, the language model of the present disclosure may be configured to assess the likelihood of a particular word to appear or appearing in a sentence given by the text output using a weighted language metric.

Following the text output being produced (and potentially corrected) by the speech recognition model in step 220, the method 200 further comprises a step 230 of determining a corresponding action for the patient monitor responsive to the text output. As will be later disclosed, this may comprise analyzing the text output to link it to a predefined action of the patient monitor. Accordingly, the patient monitor performs the corresponding (e.g., predefined) action, thus performing an action in response to a voice command from a user.

For cases when the voice input is particularly long and/or comprises a plurality of sentences, the method 200 may comprise a step 215, prior to step 220, of segmenting the voice input into one or more voice input segments. Specifically, the voice input may be segmented such that each voice input segment comprises at least one sentence of the voice input. Each voice input segment may then be processed separately in step 220, as opposed to processing a single long voice input, which may improve the speed/efficiency of the speech recognition model and/or the accuracy of the resulting text output.

Furthermore, the text output produced in step 220 may comprise one or more text output segments, corresponding to each of the one or more voice input segments. Consequently, in step 230, a different corresponding action may be determined for each text output segment. Alternatively, a corresponding action may be determined responsive to a combination of the text output segments.

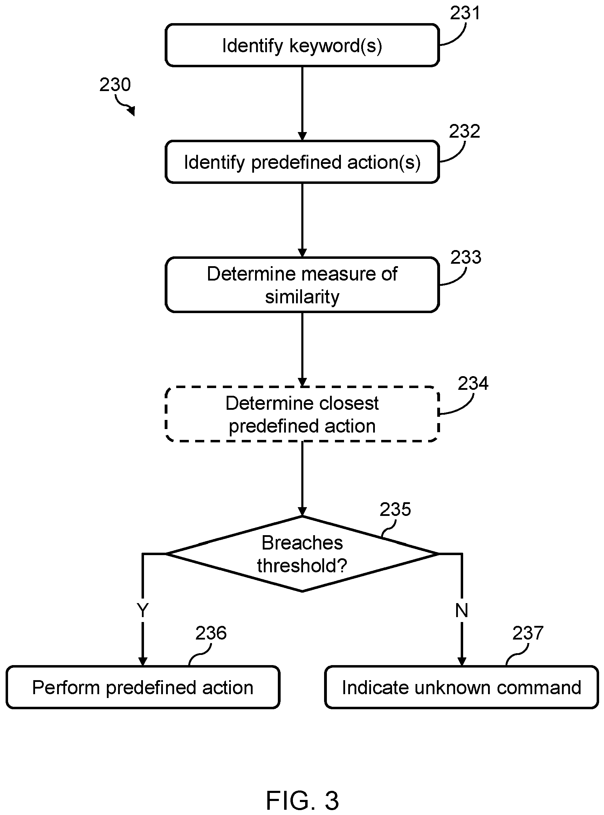

Fig. 3 shows a flowchart outlining an embodiment of step 230 of the method 200. In particular, the embodiment of Fig. 3 describes a possible technique analyzing/processing the text output to determine the corresponding action for the patient monitor.

In the present context, the patient monitor may be (pre-)configured with a plurality of predefined actions, i.e., functions of the patient monitor that it may be instructed to perform through voice commands. Each predefined action may be associated with one or more "keywords" that describe the predefined action and acts as markers/indicators for the predefined action. Certain keywords may also be shared across multiple predefined actions if they represent similar functions.

As an example, the keyword "display" may be associated with a number of actions related to displaying information on a display of the patient monitor. A further keyword "temperature" may be associated with actions in relation to a subject's body temperature. Furthermore, in combination, the keywords "display" and "temperature" may correspond to a single predefined action of displaying the subject's body temperature on the display of the patient monitor. Different predefined actions for the patient monitor can thus be identified from their associated keywords.

According to the present embodiment, step 230 may first comprise identifying one or more keywords in the text output (step 231). This may comprise iteratively searching the text output for any keywords from a discrete (i.e., non-repeating) list of keywords for the patient monitor, where each keyword from the list is associated with at least one predefined action of the patient monitor.

Subsequently, responsive to the one or more keywords, step 230 may comprise identifying at least one predefined action associated with the one or more keywords (step 232). In other words, the keywords present in the text output are matched to corresponding predefined action(s) for the patient monitor.

In particular, it is understood that different users may articulate (i.e., say) certain voice commands differently, e.g., by using different words and/or by using additional words. For example, the skilled person will recognize that the two commands "display patient temperature" and "please show the temperature of the patient" have the same meaning though are grammatically different.

Keyword matching can thus help to account for ambiguity and/or inconsistency between voice commands by focusing on key/important details. For instance, in the present example, the keywords "temperature" and "subject" contained within the two commands may be identified (while words such as "please" may be ignored), thus would resulting in similar predefined actions being identified for the two cases.

Furthermore, in some examples, the keyword matching may take into account the semantic similarities between words. Continuing with the above example, the words "display" and "show" in the two commands may be recognized as having the same meaning and thus be associated with the same predefined actions. As a result, the two different commands would result in the same predefined action(s) being identified in step 232.

Following the predefined action(s) being identified, the patient monitor may then perform the predefined action(s). This may be particularly appropriate when only one predefined action is identified in step 232. Alternatively, further processing may be performed on the text output. This may be done to determine a single predefined action to perform from a plurality that were identified in step 232, and/or to confirm the text output is sufficiently similar to a predefined action. In other words, the text output simply containing the keyword may not be enough to cause the patient monitor to perform the predefined action.

Accordingly, step 230 may further comprise determining a measure of semantic similarity between the text output and (each of) the identified predefined action(s) (step 233). More specifically, a measure of semantic similarity may be determined between the text output and a label for (each of) the predefined action(s), where each label is a text string (i.e., a sentence) that describes a corresponding predefined action.

The measure of semantic similarity represents a measure/metric of how similar the meaning of the text output and the label for a predefined action are. Determining the measure of semantic similarity between the text output and a particular label may comprise determining a word vector (i.e., a numerical representation of the meaning of a word) for each word in the text output and the label (or a singular word vector for each of the text output and the label as a whole) and comparing the word vector(s) of the text output with the word vectors(s) of the label. Such a comparison may comprise identifying word vectors of the text output and the label that are sufficiently similar, corresponding to words in the text output and the label that have similar meanings. The measure of semantic similarity may thus be responsive to how many sufficiently similar word vectors can be identified between the text output and the label, and/or responsive to a magnitude of similarity between word vectors.

In cases where multiple predefined actions are identified in step 232, the measure of semantic similarities determined between the text output and each predefined action can indicate which predefined action the text output is most similar (i.e., closest) to, being the predefined action associated with the largest measure of semantic similarity. In order to narrow down the identified predefined actions to a single predefined action, step 230 may comprise a step 234 of determining the closest predefined action, i.e., the predefined action with the largest measure of semantic similarity when compared with the text output. The remaining predefined actions can therefore be discarded, with the closest predefined action being the one most correlated with the received voice command.

Subsequently, step 230 may comprise comparing the measure of semantic similarity (associated with either the closest predefined action or the only predefined action identified in step 232) to a threshold value (step 235). Specifically, the threshold value may represent a minimum required measure of semantic similarity between the text output and the label for a corresponding predefined action in order for the text output to be confidently assigned to the predefined action. In other words, on breaching the threshold value, the text output can be confidently understood to have the same meaning as the predefined action (or more specifically the same as the label of the predefined action).

Put another way, when the text output is sufficiently semantically similar to the label of the predefined action, the text output can be confidently determined to correspond to a voice command intended to instruct the patient monitor to perform the predefined action.

Accordingly, in response to the measure of semantic similarity breaching the threshold value, the patient monitor may perform the predefined action (step 236). Alternatively, in response to the measure of semantic similarity failing to breach the threshold value, the patient monitor may not perform the predefined action. Instead, the patient monitor may provide (e.g., on a display) an indicator that it received an unknown command, or that the received command was not clear enough (step 237). The indicator may thus also instruct the user to repeat the voice command.

Use of an appropriate threshold value to compare against the measure of semantic similarity may help to avoid cases of the patient monitor performing unintended actions. For example, in some instances, the patient monitor may receive a voice input that contains a keyword but that was not intended to instruct an action from the patient monitor, e.g., the voice input may be random background voices/conversations. It would then be undesirable for the patient monitor to perform any predefined action associated with the identified keyword. As the resulting measure of semantic similarity between the produced text output and the label of any predefined action would be expected to be small (i.e., as the text output in this case would not be expected to correspond to any possible action of the patient monitor) the threshold value would therefore desirably prevent any predefined action from being performed.

To summarize, the previous disclosure outlines a patient monitor configured to perform a speech recognition process. Voice commands are received by the patient monitor as voice inputs and processed using a speech recognition model to produce corresponding text outputs. Each text output is then associated with a corresponding action for the patient monitor to perform.

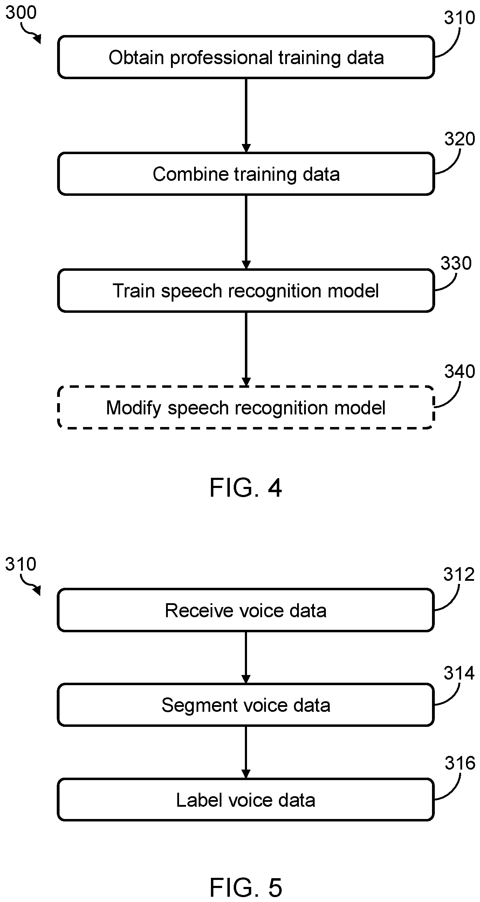

Further provided in Fig. 4 is a flowchart outlining a method 300 for training the speech recognition model of the patient monitor. Specifically, the method 300 provides a process for specializing the speech recognition model towards being used in a patient monitor in a medical setting.

In the present context, training refers to "supervised" learning of the speech recognition model using training data that comprises input data and corresponding expected/desired output data. Specifically, the model is trained by providing it with the input data and comparing the resulting outputs to the expected output data. The model is then iteratively modified using an algorithm to minimize the difference between the outputs of the model and the expected output data until they are sufficiently similar.

For the purposes of training a speech recognition model, the training data most often takes the form of labelled voice signals, i.e., audio signals comprising spoken words associated (i.e., labelled) with corresponding text transcripts of the words spoken in the audio signals. The model is hence training to process the audio signals in order to output text sufficiently similar to the text transcripts.

From training, the speech recognition model becomes familiar with the type of language comprised by the training data (i.e., the words, phrases and sentences comprised by the training data). The (trained) speech recognition model thus becomes configured to accurately process future voice signals/inputs that comprise language similar to that of the training data.

It is recognized, however, that the speech recognition model may struggle to accurately process voice inputs that comprise words/phrases that are not included in the training data and/or are sufficiently different to the language of the training data. Therefore, to enhance the speech recognition model for use in a patient monitor, the speech recognition model will desirably be trained on training data that comprises language relevant to patient monitors (i.e., medical terminology).

The method 300 first comprises a step 310 of obtaining professional speech training data related to medical language/terminology. Specifically, the professional speech training data comprises a plurality of labelled voice signals indicative of medical terms. In other words, the labelled voice signals comprise words, phrases, and/or sentences that contain medical terms. In particular, the medical terms of the labelled voice signals will preferably correspond to relevant language for a patient monitor. For example, the medical terms may correspond to the descriptive language (e.g., keywords, labels, etc.) associated with different predefined functions of the patient monitor.

As will become apparent, the professional speech training data forms part of the training data for training the speech recognition model. More precisely, the professional speech training data augments the training data with language relevant to the usage scenario of a patient monitor, thus specializing the speech recognition model towards use in patient monitors.

Fig. 5 shows a flowchart outlining an embodiment of step 310 of the method 300, i.e., an example of how the professional speech training data may be obtained.

Step 310 may first comprise receiving voice data comprising audio data indicative of medical terms (step 312). Specifically, the voice data comprises a series of (spoken) words, phrases and/or sentences that include relevant medical terms. As will become obvious, the voice data forms the input data of the professional speech training data.

It will be appreciated that the voice data may first be generated according to an appropriate text/script that comprises the series of words, phrases and/or sentences. For example, the voice data may be generated by recording the verbal reading of the script by one or more people reading. Alternatively, the voice data may be (artificially) generated from the script using a text-to-speech generator. More precisely, text files comprising the script may be processed by a text-to-speech generator to generate the voice data.

The words, phrases and/or sentences of the script may be desirably set according to the desired contents of the professional speech training data. In other words, the script may be manually written (by a person) in order to contain desired medical terms.

As another example, the script may comprise an instructions-for-use manual (i.e., a user manual) for a patient monitor. In particular, such an instructions-for-use manual (that explains to a user the functions of the patient monitor) may comprise all the relevant technical/medical language associated with the patient monitor, and thus all the desired medical terms for the professional speech training data.

Following receiving the voice data, step 310 may comprise segmenting the voice data into a plurality of voice data portions (step 314). Specifically, each voice data portion comprises a word, phrase and/or sentence of the voice data.

Subsequently, step 310 may comprise labelling each voice data portion with a respective transcript comprising text data of the word, phrase and/or sentence of the voice data portion (step 316). In cases when the voice data was originally generated according to a script, the respective transcripts for the voice data portions may be taken directly from the script (e.g., copied from a text file comprising the script). Alternatively, the voice data portions may be labelled with the respective transcripts manually (i.e., written/typed by a person).

The resulting plurality of labelled voice data portions may thus form the professional speech training data. In particular, each labelled voice data portion represents an individual training element of the professional speech training data. Explicitly, during training, each voice data portion may be provided as an input to the speech recognition model, while each respective transcript (representing the expected output) may be compared against the actual output from the model.

Returning to Fig. 4, following obtaining the professional speech training data, the method 300 comprises a step 320 of producing integrated speech training data by combining the professional speech training data with general speech training data.

In the present context, general speech training data refers to any speech recognition training data that primarily comprises generalized (i.e., non-specialist) words, phrases and/or sentences related to "everyday" language/speech.

In particular, it is recognized that professional speech training data alone may not be enough to adequately train a speech recognition model for a patient monitor. Specifically, (on its own) the professional speech training data may lack "basic" words and phrases that are common in the vocabulary of the general population, and thus may form part of voice commands directed towards the patient monitor.

Combining the professional speech training data with general speech training data thus results in a final training dataset (i.e., the integrated speech training data) with an expanded vocabulary range (i.e., compared to using the professional speech training data alone). A speech recognition model training using the integrated speech training data is thus more adept at recognizing a larger variety of words, both specialist and general.

In some examples, step 320 may comprise randomly or pseudo-randomly distributing the plurality of labelled voice signals (i.e., the training elements) of the professional speech training data into the general speech training data. In other words, the integrated speech training data may comprise a random or pseudo-random series/distribution of training elements from both the professional speech training data and the general speech training data.

In the above, pseudo-randomly distributing will be understood to refer to distributing using an algorithm, whereas randomly distributing may refer to manually distributing by a person.

The method 300 further comprises a step 330 of training the speech recognition model responsive to (i.e., using) the integrated speech training data.

In certain examples, training of the speech recognition model can be understood to mean (separate) training of a machine-learning model and a language model comprised by the speech recognition model. Specifically, the machine-learning model may be trained from the integrated speech training data using a supervised learning approach. Additionally, the language model may be trained using primarily the transcripts of the integrated speech training data, e.g., by generating a weighted language metric responsive to the statistical distribution of words amongst the transcripts of the integrated speech training data.

In some examples, the method 300 may comprise a further step 340 of modifying the speech recognition model to improve the efficiency and/or speed of the speech recognition model. Particularly, it is recognized that speech recognition models (especially those comprising AI algorithms) can be computationally demanding. Improving the efficiency of the speech recognition model can thus reduce the required processing resources needed to run the model. In the context of the present disclosure, this can be particularly beneficial as patient monitors often have limited processing resources.

For example, step 340 may comprise converting the speech recognition model from a low efficiency programming language (e.g., Python) to a higher efficiency programming language (e.g., C, C++).

To provide more context, interpreted programming languages such as Python are popular for developing and training AI algorithms/models due to their comprehensive pre-existing libraries and simplified syntax. It is well known by those skilled in the art, however, that such programming languages are (for the most part) computationally inefficient compared to many compiled programming languages such as C and C++.

One approach of the present speech recognition model may thus be to train the speech recognition model using an interpreted programming language, and then convert (i.e., modify) the trained speech recognition model to a higher efficiency compiled programming language for use in a patient monitor.

Alternatively (or additionally) step 340 may comprise modifying and/or processing the speech recognition model using a just-in-time model.

In the present context, just-in-time (or more specifically just-in-time compilation) refers to the process of compiling (part of) computer code for a program at the point the program is run, as opposed to compiling the entirety of the computer code before the program is run.

In the present example, the just-in-time model may analyze the speech recognition model to identify parts of the speech recognition model that are used most frequently. These may be highlighted/indicated by the just-in-time model (e.g., by placement of a marker in/on corresponding parts of the speech recognition model) so that they can be identified by a just-in-time compiler. The speech recognition may then be adaptively compiled by the just-in-time compiler (e.g., by compiling only the identified parts of the speech recognition model when the speech recognition model is run) thereby increasing the speed and efficiency of the speech recognition model.

Via the implementation of the just-in-time model, the computing resources (e.g., CPU computing power, and memory storage space) required to run the proposed (AI-based) speech recognition will be significantly reduced. Hence, the proposed speech recognition may be advantageously used in a patient monitor, whose standard hardware platform may be less than ideal for running software with AI characteristics.

It will be understood that disclosed methods are preferably computer-implemented methods. As such, there is also proposed the concept of one or more computer programs comprising code means for implementing any described method when said programs are run on a processing system, such as a computer. Thus, different portions, lines or blocks of code of a computer program according to an embodiment may be executed by a processing system or computer to perform any herein described method. In particular, when a computer program according to an embodiment is executed on a patient monitor comprising a processing system, the computer program causes the processing system to perform any herein described method of speech recognition.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

In some alternative implementations, the functions noted in the block diagram(s) or flow chart(s) may occur out of the order noted in the Figures. For example, two blocks shown in succession may, in fact, be executed substantially concurrently, or the blocks may sometimes be executed in the reverse order, depending upon the functionality involved.

Functions implemented by a processor may be implemented by a single processor or by multiple separate processing units which may together be considered to constitute a "processor". Such processing units may in some cases be remote from each other and communicate with each other in a wired or wireless manner.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

## Claims

1. A computer-implemented method (300) for training a speech recognition model for a patient monitor (100), wherein the speech recognition model is configured to process a voice input to produce a text output,
wherein the computer-implemented method comprises:
obtaining (310) professional speech training data comprising a plurality of labelled voice signals indicative of medical terms;
producing (320) integrated speech training data by combining the professional speech training data with general speech training data; and
training (330) the speech recognition model responsive to the integrated speech training data.

2. The computer-implemented method of claim 1, wherein the step of obtaining the professional speech training data comprises:
receiving (312) voice data comprising audio data indicative of medical terms;
segmenting (314) the voice data into a plurality of voice data portions, wherein each voice data portion comprises a word, phrase, or sentence of the voice data; and
labelling (316) each voice data portion with a respective transcript comprising text data of the word, phrase, or sentence of the voice data portion.

3. The computer-implemented method of claim 2, wherein the voice data is generated from text files from an instructions-for-use manual for the patient monitor.

4. The computer-implemented method of any one of claims 1 to 3, wherein the step of producing the integrated speech training data comprises pseudo-randomly or randomly distributing the plurality of labelled voice signals of the professional speech training data into the general speech training data.

5. The computer-implemented method of any one of claims 1 to 4, further comprising modifying (340) the speech recognition model using a just-in-time model.

6. A computer-implemented method (200) for speech recognition in a patient monitor (100) comprising:
receiving (210) a voice input indicative of a command for the patient monitor;
processing (220) the voice input using the trained speech recognition model of any one of claims 1 to 5 to produce the text output; and
determining (230), responsive to the text output, a corresponding action for the patient monitor.

7. The computer-implemented method of claim 6, wherein, prior to processing the voice input, the voice input is segmented (215) into one or more voice input segments, wherein each voice input segment comprises at least one sentence of the voice input.

8. The computer-implemented method of any one of claims 6 or 7, wherein the speech recognition model comprises:
a machine-learning model configured to produce the text output from the voice input; and
a language model configured to:
for one or more initial words in the text output:
assess the likelihood of the initial word, compared to one or more homophones associated with the initial word, appearing in a sentence given by the text output; and
in response to one of the one or more homophones being more likely than the initial word, replace the initial word in the text output with the homophone.

9. The computer-implemented method of claim 8, wherein the machine-learning model comprises a combination of a convolutional neural network and a transformer.

10. The computer-implemented method of any one of claims 8 or 9, wherein the language model is configured to assess the likelihood of a particular word to appear in a sentence given by the text output using a weighted language metric, wherein the weighted language metric indicates a likelihood of a word to appear before and/or after a given sequence of words in a sentence.

11. The computer-implemented method of any one of claims 6 to 10, wherein the step of determining the corresponding action comprises:
identifying (231) one or more keywords in the text output; and
responsive to the one or more keywords, identifying (232) a predefined action associated with the one or more keywords.

12. The computer-implemented method of claim 11, wherein the step of determining the corresponding action further comprises:
determining (233) a measure of semantic similarity between a label for the predefined action and the text output; and
in response to the measure of semantic similarity breaching (235) a threshold value, performing (236) the predefined action.

13. The computer-implemented method of claim 11, wherein the step of determining the corresponding action further comprises:
responsive to the one or more keywords, identifying (232) one or more further predefined actions associated with the one or more keywords;
determining (233), for each predefined action, a respective measure of semantic similarity between a label for the predefined action and the text output;
determining (234) a closest predefined action, being the predefined action having the label associated with the largest measure of semantic similarity; and
in response to the largest measure of semantic similarity breaching (235) a threshold value, performing (236) the closest predefined action.

14. A patient monitor (100) comprising:
a microphone (110) for receiving a voice input; and
a processing system (120) configured to:
process (220) the voice input using a trained speech recognition model to produce a text output, wherein the speech recognition model is trained using a computer-implemented method (300) comprising:
obtaining (310) professional speech training data comprising a plurality of labelled voice signals indicative of medical terms;
producing (320) integrated speech training data by combining the professional speech training data with general speech training data; and
training (330) the speech recognition model responsive to the integrated speech training data; and
determine (230), responsive to the text output, a corresponding action for the patient monitor.

15. A computer program product comprising computer program code means which, when executed on a patient monitor (100) having a processing system (120), cause the processing system to perform all of the steps of the method (200) according to any one of claims 6 to 13.
